# EUROPEAN PATENT APPLICATION

(11) **EP 2 119 893 A2**
(43) Date of publication of application: **18.11.2009**
(21) Application number: 09159474.7
(22) Date of filing: 05.05.2009
(51) Int. Cl.: F02C 7/10

(54) **Recuperators for gas turbine engines**

(30) Priority: 16.05.2008 US 121955
(71) Applicant: Honeywell International Inc., Morristown, NJ 07962 (US)
(72) Inventor: Smalley, Larry A., Morristown, NJ 07962-2245 (US); Desplanque, Greg D., Morristown, NJ 07962-2245 (US)
(74) Representative: Buckley, Guy Julian

(57) **Abstract**

An integrated heat exchanger assembly for a gas turbine engine includes a first flow path, a second flow path, and a third flow path. The first flow path is configured to be coupled to a compressor and a combustor, to receive compressed air from the compressor, and to supply the compressed air to the combustor. The second flow path is configured to be coupled to the compressor or the first flow path, or both, to receive compressed air therefrom, and to be coupled to the combustor and to supply compressed air thereto. The third flow path is disposed adjacent to the first and second flow paths, and is configured to be coupled to an exhaust section, to receive exhaust air therefrom, and to allow heat transfer from the exhaust air in the third flow path to the compressed air in the first and second flow paths.

## Description

### FIELD OF THE INVENTION

The present invention relates to gas turbine engines and, more particularly, to an integrated heat exchanger for a gas turbine engine.

### BACKGROUND OF THE INVENTION

A gas turbine engine may be used to power various types of vehicles and systems. A particular type of gas turbine engine that may be used in ground power or as an on board power source for an aircraft is a turboshaft gas turbine engine. A turboshaft gas turbine engine may include, for example, five major sections: an inlet section, a compressor section, a combustor section, a turbine section, and an exhaust section.

The inlet section typically is positioned at the front of the engine and guides the airflow into the compressor section. The compressor section raises the pressure of the air it receives from the inlet to a relatively high level. The compressed air from the compressor section then enters the combustor section where fuel is injected. The injected fuel is ignited in the combustor, which significantly increases the energy of the compressed air.

The high-energy compressed air from the combustor section then flows into and through the turbine section, causing radially mounted turbine blades to rotate and generate energy. Specifically, high-energy compressed air impinges on turbine blades, causing the turbine to rotate. The air exits the turbine section and is exhausted from the engine via the exhaust section. The energy remaining in this exhaust air is waste heat for a turbine engine.

Certain gas turbine engines have heat exchangers that are designed to recover heat from exhaust air that would otherwise be exiting the engine. Such heat exchangers typically take the form of a heat exchanger that serves to recuperate, or reclaim, this heat. While heat exchangers can be quite effective at improving engine efficiency, traditional heat exchangers are generally relatively large and heavy, and greatly increase the weight and size of the engine.

Accordingly, it is desirable to provide an integrated heat exchanger for a turbine engine that potentially improves engine efficiency without greatly increasing the size and/or weight of the turbine engine. Furthermore, other desirable features and characteristics of the present invention will be apparent from the subsequent detailed description and the appended claims, taken in conjunction with the accompanying drawings and the foregoing technical field and background.

### SUMMARY OF THE INVENTION

In accordance with an exemplary embodiment of the present invention, an integrated heat exchanger assembly for an engine having at least a compressor, a combustor, a turbine section, and an exhaust section is provided. The integrated heat exchanger assembly comprises a housing having a plurality of walls forming a first flow path, a second flow path, and a third flow path. The first flow path is configured to be coupled to the compressor and to the combustor. The first flow path is further configured to receive compressed air from the compressor, and to supply the compressed air to the combustor. The second flow path is configured to be coupled to the compressor or the first flow path, or both, and to receive compressed air therefrom. The second flow path is further configured to be coupled to the combustor and to supply the compressed air thereto. The third flow path is configured to be coupled to the exhaust section. The third flow path is disposed adjacent to the first flow path and adjacent to the second flow path. The third flow path is configured to receive exhaust air from the exhaust section, and to allow heat transfer from the exhaust air in the third flow path to the compressed air in the first and second flow paths.

In accordance with another exemplary embodiment of the present invention, a turbine engine is provided. The turbine engine comprises an inlet section, an exhaust section, a compressor, an integrated heat exchanger assembly, a combustor, and a turbine. The compressor is operable to supply compressed air. The integrated heat exchanger assembly is coupled to the compressor, and is configured to receive compressed air therefrom. The integrated heat exchanger assembly comprises a housing having a plurality of walls forming a first flow path, a second flow path, and a third flow path. The first flow path is coupled to receive compressed air from the compressor. The second flow path is coupled to receive compressed air from the compressor or the first flow path, or both. The third flow path is coupled to the exhaust section. The third flow path is disposed adjacent to the first flow path and adjacent to the second flow path. The third flow path is coupled to receive exhaust air from the exhaust section, and is configured to allow heat transfer from the exhaust air in the third flow path to the compressed air in the first and second flow paths. The combustor is coupled to receive at least a portion of the compressed air from the first flow path and the second flow path, and is operable to supply combusted air. The turbine is coupled to receive the combusted air from the combustor, and is operable to power the compressor and to supply exhaust air for the third flow path.

In accordance with a further exemplary embodiment of the present invention, an integrated heat exchanger assembly for an engine having at least a compressor, a combustor, and an exhaust section, is provided. The integrated heat exchanger assembly comprises a housing having a plurality of walls forming a compressor flow path and an exhaust flow path. The compressor flow path is configured to be coupled to the compressor and to the combustor. The compressor flow path is further configured to receive compressed air from the compressor and to supply compressed air to the combustor. The exhaust flow path is configured to be coupled to the exhaust section. The exhaust flow path is surrounded by the compressor flow path, and is configured to receive exhaust air from the exhaust section and to allow heat transfer from the exhaust air in the exhaust flow path to the compressed air in the compressor flow path.

Other independent features and advantages of the preferred apparatus and methods will become apparent from the following detailed description, taken in conjunction with the accompanying drawings which illustrate, by way of example, the principles of the invention.

### BRIEF DESCRIPTION OF THE DRAWINGS

FIG. 1 is a simplified cross sectional view of a portion of a turbine engine, such as the single-spool turboshaft gas turbine, that includes an integrated heat exchanger assembly, in accordance with an exemplary embodiment of the present invention;

FIG. 2 is a simplified cross section view of an integrated heat exchanger assembly for a turbine engine in accordance with an exemplary embodiment of the present invention;

FIG. 3 is a simplified cross sectional view of an alternative embodiment of an integrated heat exchanger assembly for a turbine engine in accordance with another exemplary embodiment of the present invention;

FIG. 4 is a simplified cross sectional view of another alternative embodiment of an integrated heat exchanger assembly for a turbine engine in accordance with another exemplary embodiment of the present invention;

FIG. 5 is a simplified cross sectional view of another alternative embodiment of an integrated heat exchanger assembly for a turbine engine in accordance with another exemplary embodiment of the present invention;

FIG. 6 is a simplified cross sectional view of another alternative embodiment of an integrated heat exchanger assembly for a turbine engine in accordance with another exemplary embodiment of the present invention; and

FIG. 7 is a simplified cross sectional view of an exemplary dimple in a wall that can be implemented in connection with an integrated heat exchanger assembly, such as the integrated heat exchanger assemblies of FIGS. 2-6, in accordance with an exemplary embodiment of the present invention.

### DETAILED DESCRIPTION OF A PREFERRED EMBODIMENT

Before proceeding with the detailed description, it is to be appreciated that the described embodiment is not limited to use in conjunction with a particular type of turbine engine. Thus, although the present embodiment is, for convenience of explanation, depicted and described as being implemented in a single-spool turboshaft gas turbine engine, it will be appreciated that it can be implemented in various other types of turbine engines, and in various other systems and environments.

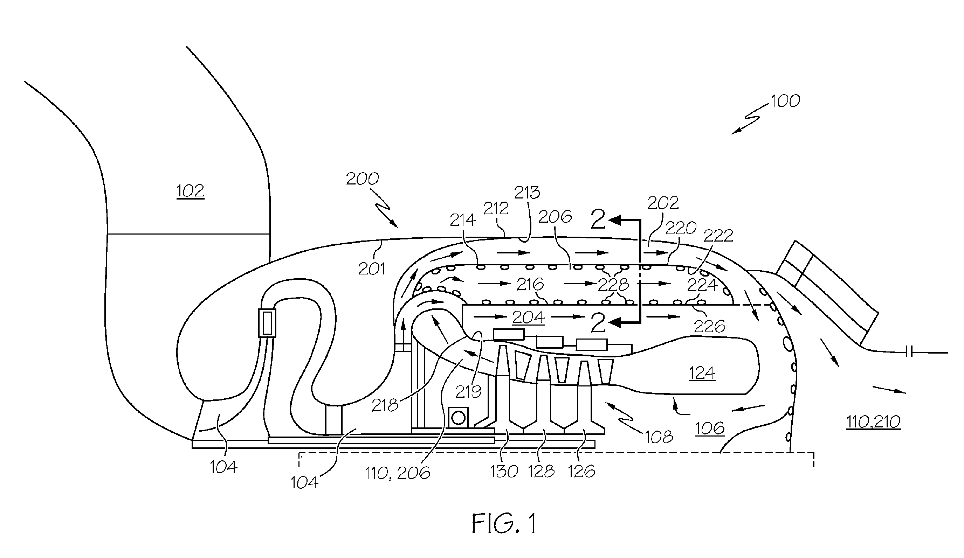

An exemplary embodiment of an upper portion of an annular single-spool turboshaft gas turbine engine 100 is depicted in FIG. 1. As will be described in greater detail below, the depicted gas turbine engine 100 includes the integration of an integrated heat exchanger into a gas turbine engine where portions of the integrated heat exchanger replace existing housings/features required of a typical gas turbine, to thereby provide an improved gas turbine engine. As depicted in FIG. 1, the engine 100 includes an intake section 102, a compressor section 104, a combustion section 106, a turbine section 108, and an exhaust section 110.

In the embodiment of FIG. 1, the compressor section 104 includes two compressor stages. However, in other embodiments the number of compressors in the compressor section 104 may vary. In the depicted embodiment, two stages of compression are used to raise the pressure of the intake air. The compressed air flow path then splits into two or more flow paths to allow exhaust gases to enter between the compressed air flow paths. In the depicted embodiment the lower compressed air flow path is used to cool the turbine and containment structure before entering the combustor. In the combustion section 106, which includes an annular combustor 124, the high pressure air is mixed with fuel and combusted. The high-temperature combusted air is then directed into the turbine section 108.

In the embodiment of FIG. 1, the turbine section 108 includes three turbines disposed in axial flow series, a high pressure turbine 126, an intermediate pressure turbine 128, and a low pressure turbine 130. However, it will be appreciated that the number of turbines, and/or the configurations thereof, may vary, as may the number and/or configurations of various other components of the exemplary engine 100. It will be similarly appreciated that the number of compressors in the compressor section 104, the number of turbines in the turbine section 108, or both, may vary in other embodiments. For example, in one alternate embodiment, the compressor section 104 includes a single compressor, and the turbine section 108 includes two turbines. In yet other alternate embodiments, the turbine section 108 may include any one or more of any number of different types of turbines, for example radial or axial turbines, and may include any number of stages. One or more radial turbines with any number of stages may be included, one or more other types of axial turbines may be included, and/or a combination of radial and axial elements may be included. Similarly, the combustion section 106 may include any of a number of different types of combustors, such as an annual combustor as shown in the Figures, and/or any one or more of a number of different types and/or arrangements of can combustors and/or other types of combustors, and/or combinations thereof. In addition, the compressor section 104 may comprise one or more of a number of different types of compressors, such as a radial compressor, an axial compressor, or a combination thereof, and may include one or more single stage compressors, multistage compressors, or combinations thereof.

In the embodiment depicted in FIG. 1, the high-temperature combusted air from the combustion section 106 expands through each turbine, causing it to rotate. The air is then exhausted through the exhaust section 110.

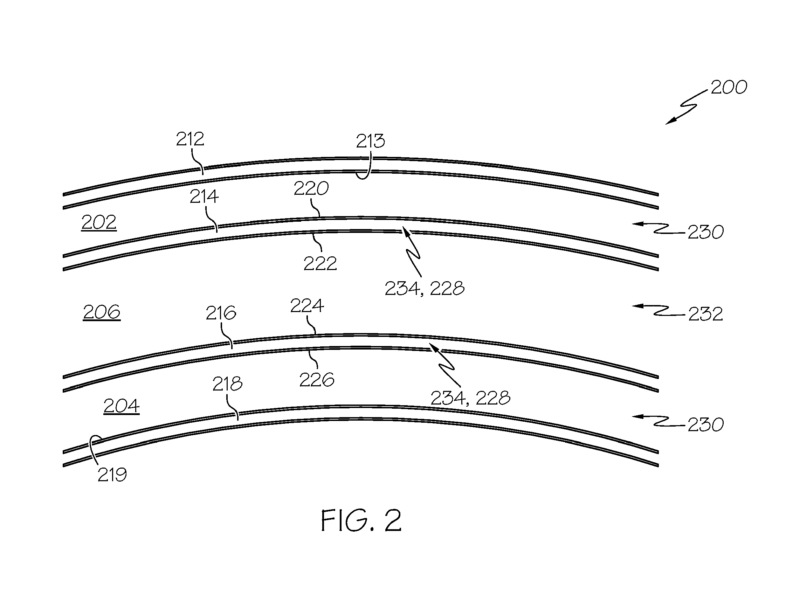

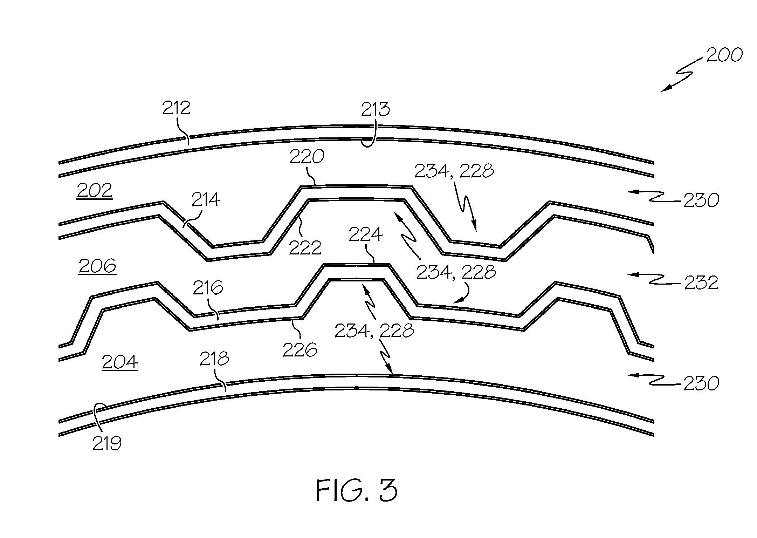

As depicted in FIG. 1, the engine 100 also includes an integrated heat exchanger assembly 200 that is coupled to the compressor section 104 and configured to receive compressed air therefrom. The integrated heat exchanger assembly 200 will now be described in greater detail in connection with FIGS. 1 and 2 in accordance with an exemplary embodiment of the present invention. Subsequently, certain alternative embodiments of the integrated heat exchanger assembly 200 will also be described in connection with FIGS. 3-6 further below.

FIG. 2 provides a simplified cross section schematic representation of an integrated heat exchanger assembly 200 of the engine 100 of FIG. 1, and that can also be incorporated into any one of a number of other different types of turbine engines, in accordance with one embodiment of the present invention. A cut through the integrated heat exchanger assembly 200 is illustrated in FIG. 2 for illustrative purposes of one exemplary embodiment of the present invention. It should be noted that the number of hot and cold flow paths could be as few as one each or any multiple of hot and cold flow paths could be included to augment heat transfer capability.

As shown in FIGS. 1 and 2, the integrated heat exchanger assembly 200 includes a housing 201 with a plurality of walls (212, 214, 216, and 218) forming a first flow path 202, a second flow path 204, and a third flow path 206. The first flow path 202 is coupled to the compressor section 104 and the combustor 124. Specifically, the first flow path 202 receives compressed air from the compressor section 104, and supplies the compressed air to the combustor 124. In the depicted embodiment, the first flow path 202 is formed between a first wall 212 and a second wall 214 of the integrated heat exchanger assembly 200. In addition, the compressed air in the first flow path 202 is relatively cool, as compared with exhaust air from the exhaust section 110.

The second flow path 204 is coupled to the compressor section 104 or the first flow path 202, or both, and is also coupled to the combustor 124. For example, in the depicted embodiment, the second flow path 204 is coupled to the compressor section 104, as is the first flow path 202. Alternatively, in other embodiments, the second flow path 204 may instead be coupled to the first flow path 202, so that the first flow path 202 is effectively divided into two flow paths at some point after receiving the compressed air from the compressor section 104. In yet other embodiments, the second flow path 204 may be coupled to both the compressor section 104 and the first flow path 202. In either of these embodiments, the second flow path 204 receives a portion of the compressed air that originated from the compressor section 104, and transports this compressed air to the combustor 124. In the depicted embodiment, the second flow path 204 is formed between a third wall 216 and a fourth wall 218, as shown in FIG. 2. Similar to that in the first flow path 202, the compressed air in the second flow path 204 is relatively cool, as compared with exhaust air from the exhaust section 110. Accordingly, the first flow path 202 and the second flow path 204 both deliver compressed air to the combustor 124.

The third flow path 206 is coupled to the exhaust section 110, and receives exhaust air therefrom. For example, in the depicted embodiment, the third flow path 206 receives exhaust air from a first portion 208 of the exhaust section 110 just downstream of the turbine section 108. In this embodiment, the third flow path 206 transports the exhaust air to a second portion 210 of the exhaust section 110, where the exhaust air finally exits the engine 100. During this transport, heat from the exhaust air in the third flow path 206 is transferred to the compressed air in the first and second flow paths 202, 204, as discussed in greater detail below. In addition, in a preferred embodiment, the third flow path 206 is sealed with respect to the first flow path 202 and sealed with respect to the second flow path 204, so that mixing of compressed air in the first and second flow paths 202, 204 with the exhaust air in the third flow path 206 is prevented.

As shown in FIGS. 1 and 2, the third flow path 206 is disposed adjacent to the first flow path 202 and adjacent to the second flow path 204. In the depicted embodiment, the third flow path 206 shares a common wall with both of the first and second flow paths 202, 204. Specifically, the third flow path 206 is formed between the above-mentioned second and third walls 214, 216. Accordingly, the third flow path 206 shares the second wall 214 with the first flow path 202, and likewise shares the third wall 216 with the second flow path 204. The third flow path 206 thereby allows heat transfer from the exhaust air being transported therein to the compressed air being transported in the first and second flow paths 202, 204. The third flow path 206 exhausts to ambient.

Also as shown in FIGS. 1 and 2, in the depicted embodiment, the first wall 212 has a surface 213 facing the first flow path 202. In addition, the second wall 214 has a first surface 220 facing the first flow path 202, and a second surface 222 facing the third flow path 206. Similarly, in this depicted embodiment, the third wall 216 has a first surface 224 facing the third flow path 206, and a second surface 226 facing the second flow path 204. The fourth wall 218 also has a surface 219 facing the second flow path 204. In addition, in the depicted embodiment, the second and third walls 214, 216 also include a plurality of surface dimples 228 that are formed in each of the surfaces between the compressed air and exhaust flow paths in order to facilitate heat transfer.

As shown in FIG. 1, the annular combustion section 106 mixes the high pressure compressed air with fuel. This fuel air mixture is ignited in the combustor. This combustion process produces high temperature, high pressure air which is discharged to an inlet of the turbine section 108. The turbine section 108 extracts some heat and pressure from the combustion section 106 discharge gas and discharges the air into the exhaust side of the third flow path 206. This higher temperature exhaust air flows in the third flow path 206 for exhaust air and provides heat transfer into the cooler high pressure compressor discharge air which is flowing in the adjacent first and second flow paths 202, 204. This exhaust air ultimately leaves the integrated heat exchanger assembly 200 and continues out through ducting of the exhaust section 110 to be discharged to ambient.

In a preferred embodiment, the turbine section 108 includes an inlet toward the aft end of the gas turbine engine 100, and the air flow through the axial turbine section 108 is from the aft forward such that the discharge of the turbine section 108 is forward and close to the compressor section 104. The exhaust is then turned approximately 180 degrees from going in a forward direction, after proceeding through the turbine section 108 to enter the integrated heat exchanger assembly 200. The integrated heat exchanger assembly 200 allows flow of the higher temperature turbine exhaust air through its designated flow path 206 adjacent to the designated flow paths 202 and 204 for the compressor discharge air. Both flows (the higher temperature exhaust air and the higher pressure compressed air) are preferably proceeding in a forward to aft direction. Thus, this is a coincident or same way flow heat exchanger as shown in figure 1, in accordance with an exemplary embodiment of the present invention.

The configurations of the gas turbine engine 100 and the integrated heat exchanger assembly 200 as depicted in the Figures and described above allows for the creation of a compact gas turbine with a minimized weight and part count addition. In addition, the integrated heat exchanger assembly 200 is configured to achieve heat exchange benefits for the combustion section 106 inlet air by transferring otherwise unusable heat in the exhaust air.

FIGS. 3-6 show potential alternate flow path configurations of the integrated heat exchanger assembly 200. Each of the alternate configurations depicted in FIGS. 3-6 preferably uses extensive surface dimpling to facilitate the transfer of heat between the exhaust and compressed air flow paths. It will be appreciated that FIGS. 2-6 only depict certain exemplary embodiments, and that the invention is not limited to these specific embodiments.

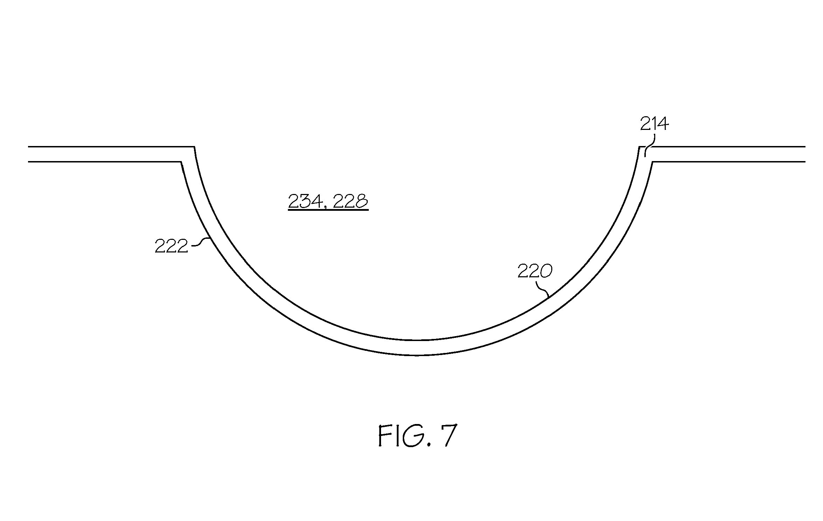

In each of the various depicted embodiments the compressed air flow is exposed to the heat transfer from the exhaust flow in adjacent flow paths. The extensive use of a system of three dimensional surface cavities into the walls between the hot and cold flow paths improves the heat transfer. Each surface cavity or dimple 234 acts as a vortex generator providing an enhanced heat transfer between the dimpled surface and gaseous flows. In a preferred embodiment, the surface cavities or dimples 234 resemble the surface dimples 228 of FIG. 1. FIG. 7 shows a dimple 234, 228 in the second wall 214. Preferably in each of the embodiments of FIGS. 2-6, each of the second wall 214, the third wall 216, and the fourth wall 219 includes various dimples 234, 228 formed thereon. Preferably such dimples 234, 228 are formed at least substantially continuously along each of the second wall 214, and the third wall 216 at least substantially throughout the length of such respective second and third walls 214, and 216. Preferably such dimples 234, 228 are formed at least partially continuously along the fourth wall 218. However, this may vary in other embodiments.

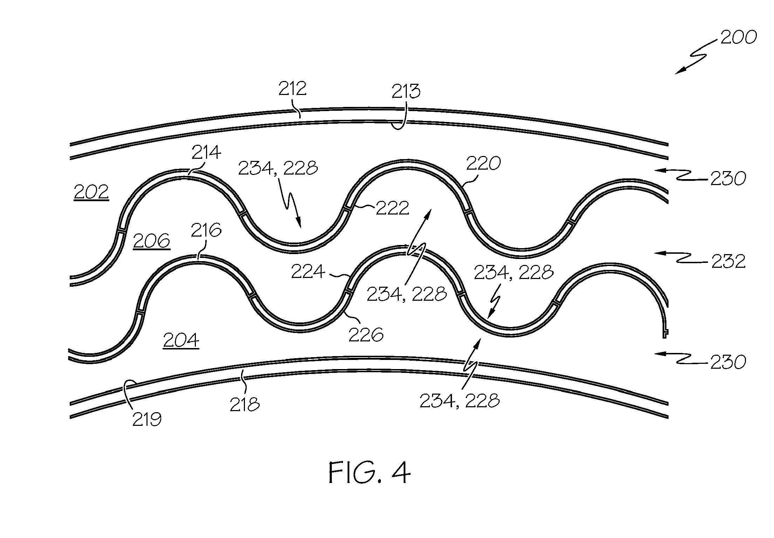

In the embodiments of FIGS. 3 and 4, the second and third walls 214, 216 include various dimples 234, 228 comprising alternating cavities and bumps with respect to various of the flow paths (e.g. a bump in a particular flow path corresponds to a cavity in a particular adjacent flow path, and vice versa). Specifically, in the embodiments of FIGS. 3 and 4, the second wall 214 includes various dimples 234, 228 comprising alternating cavities and dimples interfacing with the first and third flow paths 202, 206. Similarly, also in both of the embodiments of FIGS. 3 and 4, the third wall 216 includes various dimples 234, 228 comprising alternating cavities and bumps with respect to the second and third flow paths 204, 206. In various other embodiments, the dimples 234, 228 may take any one or more of a number of different patterns or forms. In addition, as shown in these embodiments of FIGS. 3 and 4, preferably the second wall 214 and/or the third wall 216 is non-circumferential in shape with various curves or protrusions as shown in the cross-sectional view of FIGS. 3 and 4 to further maximize wall surface contact.

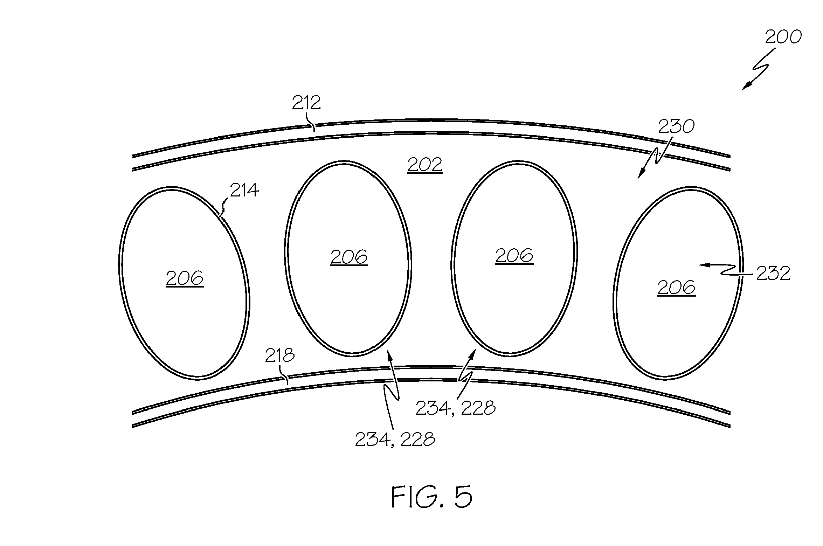

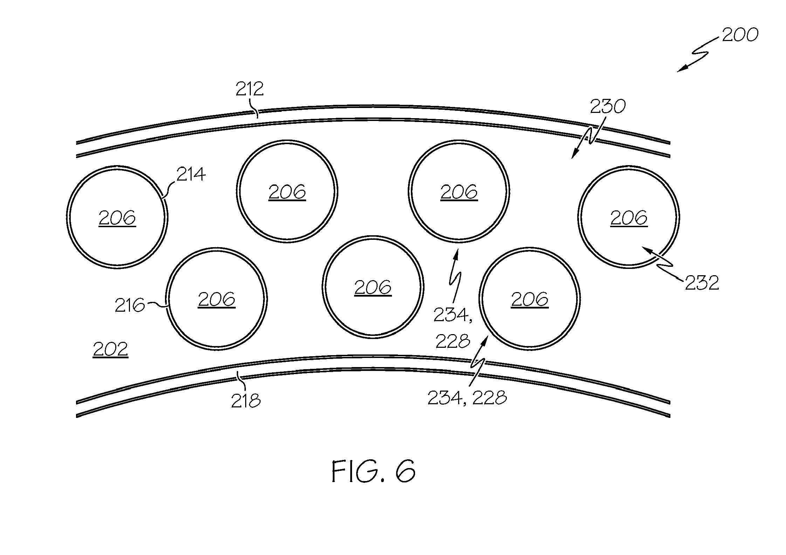

In addition, as shown in FIGS. 5 and 6, in certain embodiments the integrated heat exchanger assembly 200 may include a single flow path 230 (e.g., the first flow path 202, as referenced herein) with compressed/cooler air that surrounds one or more exhaust flow paths 232 (e.g., the third flow path 206, as referenced herein). As shown in FIGS. 5 and 6, the second flow path 204 may not be necessary in such embodiments, and/or there may be multiple third flow paths 206.

In the embodiments of FIGS. 5 and 6, the first flow path 202 surrounds each of the third flow paths 206, in order to maximize heat flow and transfer therebetween. Also in the embodiments of FIGS. 5 and 6, the integrated heat exchanger assembly 200 includes several exhaust flow paths 206. Each of the exhaust flow paths 206 is coupled to the exhaust section 110, and exhausts to ambient. In addition, in the embodiments of FIGS. 5 and 6, each of the exhaust flow paths 206 is surrounded by a compressor flow path 202 and is configured to receive exhaust air from the exhaust section 110 and to allow heat transfer from the exhaust air in the exhaust flow paths 206 to the compressed air in the compressor flow path 202. Also in the embodiments of FIGS. 5 and 6, each of the exhaust flow paths 206 is housed in a separate one of a plurality of tubes or other types of exhaust flow path housings formed by one or more second walls 214 and surrounded by the compressor flow path 202 as shown in FIGS. 5 and 6.

As shown in the various alternate depicted embodiments of FIGS. 2-6, among other possible embodiments, the wall geometry and corresponding nature, size, and/or repetition of the wall features may vary in different embodiments. Also as shown in FIGS. 2-6, various compressed air flow paths 230 and exhaust flow paths 232 are preferably adjacent to one another in each of these embodiments to facilitate heat flow and transfer therebetween.

The embodiments of FIGS. 2-6 may also vary in one or more other respects. For example, in one alternate embodiment the flow path surfaces could include the use of foam porous materials or other coatings to enhance heat transfer. Addition of fins to the wall surfaces, for additional heat transfer benefits, would also be possible in the various embodiments. Other variations may also be made in yet other embodiments.

Accordingly, an integrated heat exchanger assembly 200 is provided for a turbine engine that potentially improves engine efficiency without significantly increasing the size and/or weight of the turbine engine. In addition, a turbine engine 100 is provided that includes such an integrated heat exchanger assembly 200, and that has potentially improved efficiency without a significant increase in size and/or weight.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An integrated heat exchanger assembly (200) for an engine (100) having at least a compressor (104), a combustor (106), a turbine (108), and an exhaust section (110), the integrated heat exchanger assembly (200) comprising a housing (201) having a plurality of walls (212, 214, 216, and 218) forming:
a first flow path (202) configured to be coupled to the compressor (104) and the combustor (106), the first flow path (202) configured to receive compressed air from the compressor (104) and to supply compressed air to the combustor (106);
a second flow path (204) configured to be coupled to the compressor (104) or the first flow path (202), or both, and to receive compressed air therefrom, the second flow path (204) further configured to be coupled to the combustor (106) and to supply compressed air thereto; and
a third flow path (206) configured to be coupled to the exhaust section (110), the third flow path (206) disposed adjacent to the first flow path (202) and adjacent to the second flow path (204), wherein the third flow path (206) is configured to receive exhaust air from the exhaust section (110) and to allow heat transfer from the exhaust air in the third flow path (206) to the compressed air in the first and second flow paths (202, 204).

2. The integrated heat exchanger assembly (200) of Claim 1, wherein:
the plurality of walls (212, 214, 216, and 218) comprises a first wall (212), a second wall (214), a third wall (216), and a fourth wall (218);
the first flow path (202) is formed between the first wall (212) and the second wall (214);
the second flow path (204) is formed between the third wall (216) and the fourth wall (218); and
the third flow path (206) is formed between the second wall (214) and the third wall (216).

3. The integrated heat exchanger assembly (200) of Claim 2, wherein the second wall (214) includes one or more cavities interfacing with the first flow path (202), the third flow path (206), or both.

4. The integrated heat exchanger assembly (200) of Claim 3, wherein the second wall (214) further includes one or more bumps interfacing with the first flow path (202), the third flow path (206), or both.

5. The integrated heat exchanger assembly (200) of Claim 2, wherein the third wall (216) includes one or more cavities interfacing with the second flow path (204), the third flow path (206), or both.

6. The integrated heat exchanger assembly (200) of Claim 5, wherein the third wall (216) further includes one or more bumps interfacing with the second flow path (204), the third flow path (206), or both.

7. A turbine engine (100), comprising:
an exhaust section (110);
a compressor (104) operable to supply compressed air;
an integrated heat exchanger assembly (200) coupled to the compressor (104) and configured to receive compressed air therefrom, the integrated heat exchanger assembly (200) comprising a housing (201) having a plurality of walls (212, 214, 216, and 218) forming:
a first flow path (202) coupled to receive compressed air from the compressor (104);
a second flow path (204) coupled to receive compressed air from the compressor (104) or the first flow path (202), or both; and a third flow path (206) coupled to the exhaust section (110), the third flow path (206) disposed adjacent to the first flow path (202) and adjacent to the second flow path (204), the third flow path (206) coupled to receive exhaust air from the exhaust section (110) and configured to allow heat transfer from the exhaust air in the third flow path (206) to the compressed air in the first and second flow paths (202, 204);
a combustor (106) coupled to receive at least a portion of the compressed air from the first flow path (202) and the second flow path (204), the combustor (106) operable to supply combusted air; and
a turbine (108) coupled to receive the combusted air from the combustor (106), the turbine (108) operable to power the compressor (104) and to supply exhaust air for the third flow path (206).

8. The turbine engine (100) of Claim 7, wherein:
the plurality of walls (212, 214, 216, and 218) comprises a first wall (212), a second wall (214), a third wall (216), and a fourth wall (218);
the first flow path (202) is formed between the first wall (212) and the second wall (214);
the second flow path (204) is formed between the third wall (216) and the fourth wall (218); and
the third flow path (206) is formed between the second wall (214) and the third wall (216).

9. An integrated heat exchanger assembly (200) for an engine (100) having at least a compressor (104), a combustor (106), and an exhaust section (110), the integrated heat exchanger assembly (200) comprising a housing (201) having a plurality of walls (212, 214, 216, and 218) forming:
a compressor flow path (202) configured to be coupled to the compressor (104) and the combustor (106), the compressor flow path (202) configured to receive compressed air from the compressor (104) and to supply compressed air to the combustor (106);
an exhaust flow path (206) configured to be coupled to the exhaust section (110), the exhaust flow path (206) surrounded by the compressor flow path (202), and the exhaust flow path (206) configured to receive exhaust air from the exhaust section (110) and to allow heat transfer from the exhaust air in the exhaust flow path (206) to the compressed air in the compressor flow path (202).

10. The integrated heat exchanger assembly (200) of Claim 9, further comprising:
a plurality of additional exhaust flow paths (206) configured to be coupled to the exhaust section (110), each of the additional exhaust flow paths (206) surrounded by the compressor flow path (202) and configured to receive exhaust air from the exhaust section (110) and to allow heat transfer from the exhaust air in the exhaust flow path (206) to the compressed air in the compressor flow path (202), wherein each of the exhaust flow path (206) and the additional exhaust flow paths (206) are housed in a separate one of a plurality of exhaust flow path housings (214, 216) surrounded by the compressor flow path (202).
